(19) Europäisches Patentamt / European Patent Office / Office européen des brevets

(11) **EP 4 415 948 B1**

(12) **EUROPÄISCHE PATENTSCHRIFT**

(45) Veröffentlichungstag und Bekanntmachung des Hinweises auf die Patenterteilung:
**16.07.2025   Patentblatt 2025/29**

(21) Anmeldenummer: **22801394.2**

(22) Anmeldetag: **07.10.2022**

(51) Internationale Patentklassifikation (IPC):
**B29C 53/26** *(2006.01)*      **B29C 59/00** *(2006.01)*
**B29C 61/00** *(2006.01)*

(52) Gemeinsame Patentklassifikation (CPC):
**B29C 59/007**

(86) Internationale Anmeldenummer:
**PCT/EP2022/077918**

(87) Internationale Veröffentlichungsnummer:
**WO 2023/061867 (20.04.2023 Gazette 2023/16)**

(54) **TECHNIK ZUM DYNAMISCHEN LÄNGENAUSGLEICH**

TECHNIQUE FOR DYNAMIC LENGTH COMPENSATION

TECHNIQUE DE COMPENSATION DE LONGUEUR DYNAMIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **11.10.2021   BE 202105790**

(43) Veröffentlichungstag der Anmeldung:
**21.08.2024   Patentblatt 2024/34**

(73) Patentinhaber: **Phoenix Contact GmbH & Co KG
32825 Blomberg (DE)**

(72) Erfinder: **GRETSCHER, Jürgen
72175 Dornhan (DE)**

(56) Entgegenhaltungen:
**WO-A1-2009/143644      DE-A1- 19 748 789
US-A1- 2019 202 162**

**Beschreibung**

Die Erfindung betrifft eine Technik zum dynamischen Längenausgleich beim Prägen eines Folienbands.

Herkömmlicherweise werden Folienbänder (auch: Folienstücke, kurz: Folien) zur Kennzeichnung prolater Objekte, insbesondere Leiter (auch: Kabel), verwendet. Ein Folienband wird um das prolate Objekt gewickelt (auch: appliziert) und die freien Enden verschweißt. Zur Umwicklung (auch: Umschlingung) des prolaten Objekts wird das Folienband an zwei vorbestimmten Längenabschnitten geprägt. Beispielsweise kann der Abstand der beiden vorbestimmten Längenabschnitte mindestens einem Umfang des prolaten Objekts entsprechen.

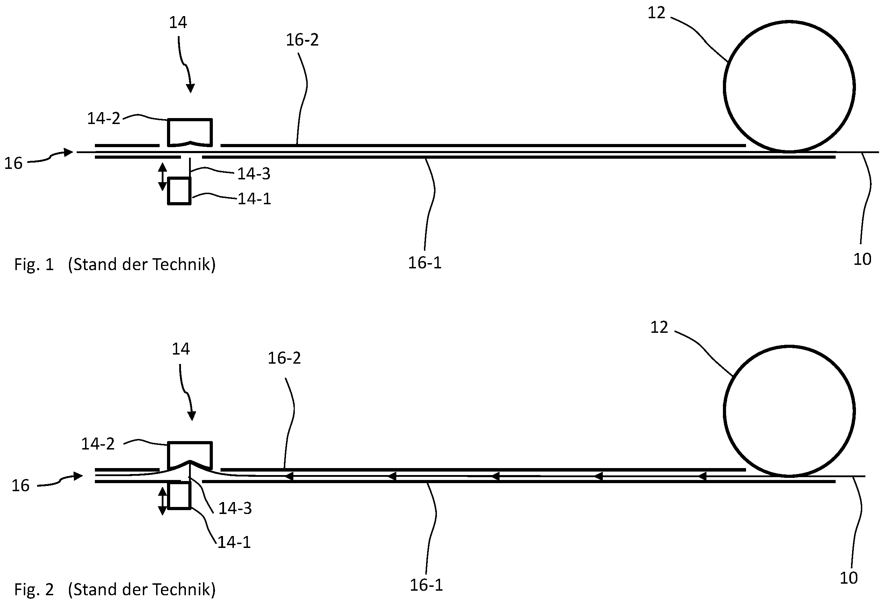

In Fig. 1 wird das Folienband 10 in einen herkömmlichen geradlinigen und starren Führungskanal 16 mit gegenüberliegenden starren Seiten 16-1 und 16-2 eingeführt. Zum Prägen wird das Folienband 10 von einer Prägestelle 14 mit einem Prägestempel 14-1, insbesondere mit einem scharfkantigen Prägeschwert 14-3, auf einer starren Seite 16-1 des Führungskanals in ein flexibles Prägekissen (z.B. ein Gummikissen) 14-2, welches auf der gegenüberliegenden starren Seite 16-2 angeordnet ist, eingedrückt und geprägt. Wie in Fig. 2 gezeigt, wird das Folienband 10 durch das Eindrücken nachgezogen und/oder verlängert. Herkömmlicherweise kann das Folienband 10 die (beispielsweise durch das Prägeschwert 14-3 erzeugte) Zugkraft nicht ausgleichen, da es an einem Ende fest unter einer Druckwalze 12 fixiert ist und nicht nachgeben kann. Dadurch kommt es zu mechanischen Spannungen im gesamten Gerät, welches zur Prägung des Folienbands 10 und der Kennzeichnung des prolaten Objektes verwendet wird. Des Weiteren stimmen weder die Positionen der Prägekanten des Folienbands 10 noch die Längen der Kennzeichnungen (auch: Schilder oder Fahnen) herkömmlicherweise mit einer vorbestimmten Abmessung für die Umwicklung überein, da das Folienband 10 unkontrolliert unter der Druckwalze 12 oder dem Prägekissen 14-2 weggezogen wird.

Aus dem allgemeinen Stand der Technik sind Vorrichtungen und Verfahren der betreffenden Art bekannt aus US 2019/202162 A1 wie auch DE 197 48 789 A1.

Ferner sind Vorrichtungen der im Oberbegriff des Patentanspruchs 1 bzw. Verfahren der im Oberbegriff des Patentanspruchs 16 genannten Art bekannt durch WO 2009/143644 A1.

Der Erfindung liegt daher die Aufgabe zu Grunde, eine Technik zum dynamischen Längenausgleich bei der Prägung eines Folienbands anzugeben.

Die Aufgabe wird mit den Merkmalen der unabhängigen Ansprüche gelöst. Zweckmäßige Ausgestaltungen und vorteilhafte Weiterbildungen der Erfindung sind in den abhängigen Ansprüchen angegeben.

Ausführungsbeispiele der Erfindung sind im Folgenden unter teilweiser Bezugnahme auf die Figuren beschrieben.

Gemäß einem ersten Aspekt umfasst eine Vorrichtung zum dynamischen Längenausgleich bei einer Prägung eines Folienbands eine Prägestelle, eine zum schlupffreien Transport des Folienbands ausgebildete Walze (beispielsweise eine Druckwalze und/oder eine Transportwalze), und einen zwischen der Prägestelle und der Walze angeordneten Führungskanal. Der Führungskanal umfasst eine zwischen einer ersten Stellung und einer zweiten Stellung bewegliche Führungsfläche. Eine Weglänge des Folienbands zwischen der Walze und der Prägestelle in der ersten Stellung der Führungsfläche ist größer als eine Weglänge des Folienbands zwischen der Walze und der Prägestelle in der zweiten Stellung. Das Folienband wird in der ersten Stellung der Führungsfläche im Führungskanal von der Walze zur Prägestelle gefördert. Die Führungsfläche wird bei der Prägung des Folienbands von der ersten Stellung in die zweite Stellung bewegt.

Die zum schlupffreien Transport des Folienbands ausgebildete Walze kann eine Druckwalze und/oder eine Transportwalze umfassen. Alternativ oder ergänzend kann ein schlupffreier Transport durch eine (beispielsweise raue) Oberflächenstruktur und/oder einen von der Walze auf das Folienband ausgeübten Druck, insbesondere näherungsweise senkrecht zu einer Längsrichtung des Führungskanals, erreicht werden.

Der Führungskanal kann auch als Medienpfad bezeichnet werden.

Die Führungsfläche kann auch als bewegliches Umlenkelement bezeichnet werden.

Die Führungsfläche kann zwischen der ersten Stellung und der zweiten Stellung innerhalb des Führungskanals beweglich sein, vorzugsweise quer zu einem vom Führungskanal bestimmten Verlauf des Folienbands.

Durch die Bewegung der Führungsfläche kann eine Bewegung des Folienbands, insbesondere eine Streckung des Folienbands, bei der Prägung kompensiert werden. Alternativ oder ergänzend kann eine Beschädigung des Folienbands bei der Prägung aufgrund von Zugkräften verhindert und/oder minimiert werden. Die Zugkräfte können beispielsweise von der Prägestelle, insbesondere einem Prägestempel und/oder Prägeschwert, auf das Folienband ausgeübt werden.

Durch die Prägung des Folienbands kann ein Anbringen einer Kennzeichnung an einem prolaten Objekt erleichtert und/oder verbessert werden.

Das Anbringen des Folienbands kann ein umlaufend geschlossenes Anordnen des Folienbands um das prolate Objekt (beispielsweise um eine Längsachse des prolaten Objekts in der Längsrichtung) umfassen. Die Vorrichtung kann eine Mechanik zum Anbringen des Folienbands um das prolate Objekt umfassen. Beispielsweise kann eine Mechanik zum Anbringen des Folienbands in einer Förderrichtung des Folienbands (d.h. einer Richtung von der Walze zur Prägestelle) nach der Prägestelle angeordnet sein.

Das Folienband kann einen beschrifteten und/oder bedruckten Abschnitt umfassen, der nach dem Anbringen des Folienbandes an dem prolaten Objekt als Fahne von dem prolaten Objekt absteht und/oder in einer Ebene lesbar ist. Beispielsweise kann durch die Prägung ein Verkleben (beispielsweise durch Kunststoffschweißen, insbesondere mittels Ultraschall oder Erwärmung) von zwei gegenüberliegenden Enden des Folienbands erleichtert und/oder eine verbesserte Ablesung des bedruckten (beispielsweise beschrifteten) Abschnitts erreicht werden.

Alternativ oder ergänzend kann durch die Prägung eine verbesserte Anformung des Folienbands an das prolate Objekt mit durch die Prägung festgelegten Abknickstellen zum Verkleben bereitgestellt werden. Alternativ oder ergänzend kann durch die Prägung eine verbesserte Stabilität eines Fahnenabschnitts des Folienbands erreicht werden.

Alternativ oder ergänzend kann durch die Prägung der bedruckte (beispielsweise beschriftete) Abschnitt des Folienbands das prolate Objekt tangieren und/oder im Wesentlichen eben sein und/oder einen (vorzugsweise vielfach) größeren Krümmungsradius als das prolate Objekt aufweisen.

Die Führungsfläche kann vorgespannt sein zur Bewegung aus der ersten Stellung und in die zweite Stellung, beispielsweise mittels einer Feder.

Die Führungsfläche kann eine Feder umfassen. Beispielsweise kann die Führungsfläche an oder um eine Drehachse (beispielsweise umfassend ein Scharnier) durch eine Feder (beispielsweise eine Blattfeder oder eine Torsionsfeder oder eine Gasdruckfeder) vorgespannt sein. Alternativ oder ergänzend kann die Führungsfläche ein deformierbares (auch: flexibles) Material und/ Formgedächtnis-Material umfassen. Eine Ruhestellung des deformierbaren Materials und/oder das Formgedächtnis der Führungsfläche kann die erste Stellung umfassen und/oder der ersten Stellung entsprechen. Das deformierbare Material und/oder Formgedächtnis-Material kann mit einem Ende der Führungsfläche an einem starren Abschnitt des Führungskanals (beispielsweise starr) befestigt sein.

Eine Zugspannung des Folienbands kann durch die Vorspannung der beweglichen Führungsfläche begrenzt sein. Die begrenzte Zugspannung kann kleiner als ein (beispielsweise dem Radius der Walze entsprechendes) Haltemoment der Walze sein. Dadurch kann eine Drehung der Walze aufgrund des Prägevorgangs oder ein Geleiten des Folienbands über die Walze aufgrund des Prägevorgangs verhindert werden.

Das Folienband kann in der ersten Stellung und/oder in der zweiten Stellung (beispielsweise zumindest abschnittsweise) an der Führungsfläche anliegen zur krummlinigen Führung des Folienbands im Führungskanal. Alternativ oder ergänzend kann das Folienband in der ersten Stellung und/oder in der zweiten Stellung krummlinig im Führungskanal geführt werden.

Eine (beispielsweise maximale) Krümmung des durch den Führungskanal bestimmten Verlaufs des Folienbands entlang der Weglänge kann in der ersten Stellung größer sein als in der zweiten Stellung.

Die Führungsfläche kann eine drehbar gelagerte Walze aufweisen, über die das Folienband, vorzugsweise schlupffrei, geführt sein kann. Dadurch kann eine Reibung des Folienbands minimiert werden.

Die Führungsfläche kann auf einer dem Folienband zugewandten Seite konvex sein.

Ein Krümmungsradius der konvexen Führungsfläche kann (beispielsweise abschnittsweise) der krummlinigen Führung entsprechen.

Ein Krümmungsradius der konvexen Führungsfläche kann kleiner sein als die Weglänge des im Führungskanal geführten Folienbands. Dadurch kann ein kleines Übersetzungsverhältnis zwischen der Vorspannung der Führungsfläche und der begrenzten Zugspannung des Folienbands erreicht werden. Die Vorspannung der Führungsfläche kann einer Normalkraft entsprechen, welche die Führungsfläche senkrecht zur Führungsfläche auf das Folienband überträgt. Das Übersetzungsverhältnis zwischen der Normalkraft der Führungsfläche und der begrenzten Zugspannung des Folienbands kann kleiner als drei zu eins (3:1) oder zwei zu eins (2:1) sein.

Ein Krümmungsradius der konvexen Führungsfläche kann vielfach größer sein als eine Dicke (d.h. Stärke) des Folienbands.

Vorzugsweise gleitet das Folienband nicht über eine Kante (beispielsweise einen Knickkante oder Schnittkante) der Führungsfläche. Dadurch kann eine Beschädigung des Folienbands (beispielsweise ein Ablösen einer Oberflächenbeschichtung und/oder einer Kennzeichnung des Folienbands) verhindert werden.

Ein Krümmungsradius der konvexen Führungsfläche kann, insbesondere in der ersten Stellung, größer als eine Breite des Führungskanals sein. Alternativ oder ergänzend kann die Breite des Führungskanals und/oder der Führungsfläche größer sein als eine Breite des (z.B. zur Prägung vorgesehenen) Folienbands.

Die Breite kann die Breite eines von der Führungsfläche berandeten Abschnitts des Führungskanals sein. Dadurch kann ein Transportstau des Folienbands im Führungskanal verhindert werden.

Das Folienband kann sowohl in der ersten Stellung als auch in der zweiten Stellung an der Führungsfläche (beispielsweise zumindest abschnittsweise) anliegen.

Die Führungsfläche kann in der ersten Stellung und in der zweiten Stellung innerhalb des Führungskanals angeordnet sein. Dadurch kann im gesamten Bereich zwischen der ersten Stellung und der zweiten Stellung die Zugkraft durch die Vorspannung begrenzt sein. Mit anderen Worten, das Folienband verläuft nie, oder nur in der zweiten Stellung der Führungsfläche, in einer Ebene. Beispielsweise lenkt die Führungsfläche in der ersten Stellung, und optional in der zweiten Stellung, das Folienband aus einer Ebene aus. Die Ebene kann durch die Abschnitte des Führungskanals an der Walze und an der Prägestelle bestimmt sein.

Die Führungsfläche kann zwischen der ersten Stellung und der zweiten Stellung schwenkbeweglich sein. Beispielsweise kann eine Drehachse (auch: Schwenkachse, beispielsweise umfassend ein Scharnier oder ein Lager) der Schwenkbewegung senkrecht zum Folienband und/oder senkrecht zum durch den Führungskanal bestimmten Verlauf des Folienbands (d.h. der Förderrichtung) angeordnet sein.

Ein Drehpunkt der Schwenkbewegung kann außerhalb des Führungskanals angeordnet sein.

Die Prägestelle kann einen quer zum Führungskanal beweglichen Prägestempel und ein in der Querbewegung des Prägestempels angeordnetes Prägekissen umfassen. Der Führungskanal kann an der Prägestelle zwischen dem Prägestempel und dem Prägekissen münden.

Die Querbewegung des Prägestempels in das Prägekissen kann die Weglänge des Folienbands im Führungskanal verkürzen, beispielsweise entgegen einer Vorspannung der Führungsfläche.

Die Führungsfläche und der Prägestempel können sich bei der Prägung gleichläufig bezüglich einer Querrichtung des Führungskanals bewegen. Die Querrichtung kann senkrecht zur Förderrichtung (d.h. dem Verlauf des Förderkanals) und/oder senkrecht zur Drehachse (d.h. Schwenkachse) der Führungsfläche sein.

Die Bewegung der Führungsfläche bei der Prägung kann eine Bewegung von der ersten Stellung und in die zweite Stellung umfassen. Dadurch kann eine Reibung an stationären Flächen des Führungskanals zwischen der Führungsfläche und der Prägestelle reduziert werden.

Alternativ oder ergänzend können die Führungsfläche und der Prägestempel sich bei der Prägung gegenläufig bezüglich der Querrichtung des Führungskanals bewegen. Dadurch kann eine erste Seite des Führungskanals einen Antrieb des Prägestempels und/oder die Drehachse der Führungsfläche umfassen und/oder eine der ersten Seite in der Querrichtung gegenüberliegende zweite Seite des Führungskanals kann besonders kompakt und/oder einfach gestaltet sein.

Alternativ oder ergänzend können die Führungsfläche und der Prägestempel sich bei der Prägung gleichläufig bezüglich der Querrichtung des Führungskanals bewegen. Dadurch kann das bei der Prägung unter Zugspannung (kurz: Spannung) gesetzte Folienband besonders reibungsarm über die Führungsfläche gleiten.

Alternativ oder ergänzend, kann die Schwerkraft zu einer Spannung des Folienbands, insbesondere entlang der Führungsfläche, beitragen.

Der Prägestempel kann ein Prägeschwert sein oder umfassen. Das Prägeschwert kann vorzugsweise senkrecht zum Führungskanal stehen. Alternativ oder ergänzend kann der Prägestempel eine (beispielsweise zugespitzte) Kante zur Prägung umfassen.

Gemäß einem zweiten Aspekt ist ein Verfahren zum dynamischen Längenausgleich bei einer Prägung eines Folienbands bereitgestellt. Das Verfahren umfasst einen Schritt des Förderns des Folienbands in einem zwischen einer Walze (beispielsweise einer Druckwalze und/oder einer Transportwalze), die zum schlupffreien Transport des Folienbands ausgebildet ist, und einer Prägestelle angeordneten Führungskanal. Das Folienband wird in einer Richtung von der Walze zu der Prägestelle gefördert. Der Führungskanal umfasst eine zwischen einer ersten Stellung und einer zweiten Stellung bewegliche Führungsfläche. Beim Fördern des Folienbands umfasst die Führungsfläche die erste Stellung und/oder nimmt die Führungsfläche die erste Stellung ein. Das Verfahren umfasst ferner einen Schritt des Prägens des Folienbands mittels der Prägestelle. Die Führungsfläche wird beim Prägen in die zweite Stellung bewegt (beispielsweise aufgrund einer zunehmenden Zugspannung des Folienbands). Eine Weglänge des Folienbands zwischen der Walze und der Prägestelle in der ersten Stellung der Führungsfläche ist größer als eine Weglänge des Folienbands zwischen der Walze und der Prägestelle in der zweiten Stellung.

Das Verfahren des zweiten Aspekts kann mittels der Vorrichtung des ersten Aspekts ausgeführt werden.

Nachfolgend wird die Erfindung unter Bezugnahme auf die Zeichnungen anhand bevorzugter Ausführungsbeispiele näher erläutert.

Es zeigen:

Fig. 1   schematisch ein Vergleichsbeispiel einer herkömmlichen Vorrichtung zur Prägung eines Folienbands in einer ersten Stellung eines Prägestempels, in welcher der Prägestempel außerhalb eines statischen Führungskanals der Vorrichtung angeordnet ist;

Fig. 2   schematisch das Vergleichsbeispiel der herkömmlichen Vorrichtung zur Prägung des Folienbands in einer zweiten Stellung des Prägestempels, in welcher der Prägestempel in den Führungskanal der Vorrichtung hineinragt und das Folienband nach links bewegt oder dehnt;

Fig. 3   schematische ein erstes Ausführungsbeispiel einer Vorrichtung zum dynamischen Längenausgleich bei einer Prägung eines Folienbands in einer ersten Stellung einer Führungsfläche, während ein Prägestempel außerhalb eines Führungskanals angeordnet ist;

Fig. 4     schematisch das erste Ausführungsbeispiel der Vorrichtung zum dynamischen Längenausgleich bei der Prägung des Folienbands in einer zweiten Stellung der Führungsfläche, während der Prägestempel in den Führungskanal hineinragt und eine Zugkraft auf das Folienband ausübt;

Fig. 5     schematisch ein zweites Ausführungsbeispiel einer Vorrichtung zum dynamischen Längenausgleich bei einer Prägung eines Folienbands in einer zweiten Stellung der Führungsfläche, während ein Prägestempel in den Führungskanal hineinragt und eine Zugkraft auf das Folienband ausübt;

Fig. 6     schematisch eine ein deformierbares (z.B. Formgedächtnis-) Material umfassende Führungsfläche sowie Zugkräfte, die auf ein Folienband wirken;

Fig. 7     schematisch eine keilförmige Spitze eines Prägestempels und einen Einzugsweg eines Folienbands in Abhängigkeit einer Eindringtiefe des Prägestempels in das Prägekissen;

Fig. 8     ein weiteres schematisches Ausführungsbeispiel einer Vorrichtung zum dynamischen Längenausgleich bei einer Prägung eines Folienbands, in dem eine bewegliche Führungsfläche einen Hebelarm umfasst; und

Fig. 9     ein weiteres schematisches Ausführungsbeispiel einer Vorrichtung zum dynamischen Längenausgleich bei einer Prägung eines Folienbands, in dem eine bewegliche Führungsfläche eine Feder umfasst.

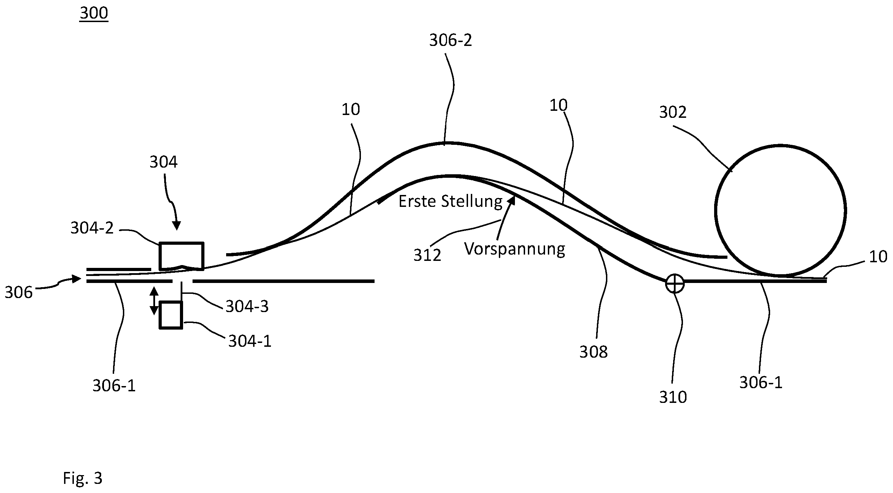

Die Fig. 3 zeigt schematisch ein erstes Ausführungsbeispiel einer Vorrichtung 300 zum erfindungsgemäßen dynamischen Längenausgleich bei einer Prägung eines Folienbands 10.

Die Vorrichtung der Fig. 3 umfasst eine Druckwalze 302, eine Prägestelle 304 und einen zwischen der Druckwalze 302 und der Prägestelle 304 angeordneten Führungskanal 306, in dem das Folienband 10 geführt wird.

Die Prägestelle 304 des ersten Ausführungsbeispiels umfasst einen Prägestempel 304-1 mit einem Prägeschwert 304-3 und ein Prägekissen 304-2. Der Prägestempel 304-1 und das Prägekissen 304-2 sind an gegenüberliegenden Seiten 306-1, 306-2 des Führungskanals 306 angeordnet.

Der Führungskanal 306 umfasst eine erste Seite 306-1, an der der Prägestempel 304-1 angeordnet ist, und eine der ersten Seite 306-1 gegenüberliegende Seite 306-2, an der das Prägekissen 304-2 angeordnet ist.

In dem ersten Ausführungsbeispiel der Fig. 3 ist eine bewegliche Führungsfläche (auch: flexibles Umlenkelement) 308 an der ersten Seite 306-1 angeordnet und/oder bildet einen Teil einer Seitenwand der ersten Seite 306-1 des Führungskanals 306. Die Führungsfläche 308 ist in dem ersten Ausführungsbeispiel der Fig. 3 mittels eines federbeaufschlagten Scharniers 310 an einem starren Teil der ersten Seite 306-1 des Führungskanals 306 drehbar gelagert und mit einer Vorspannung 312 beaufschlagt. Durch die Vorspannung 312 wird die bewegliche Führungsfläche 308 in einer Ruhestellung (beispielsweise ohne auf das Folienband 10 wirkende Zugkräfte) in der in Fig. 3 gezeigten ersten Stellung gehalten. Die zweite Seite 306-2 des Führungskanals 306 ist in dem ersten Ausführungsbeispiel der Fig. 3 starr ausgebildet.

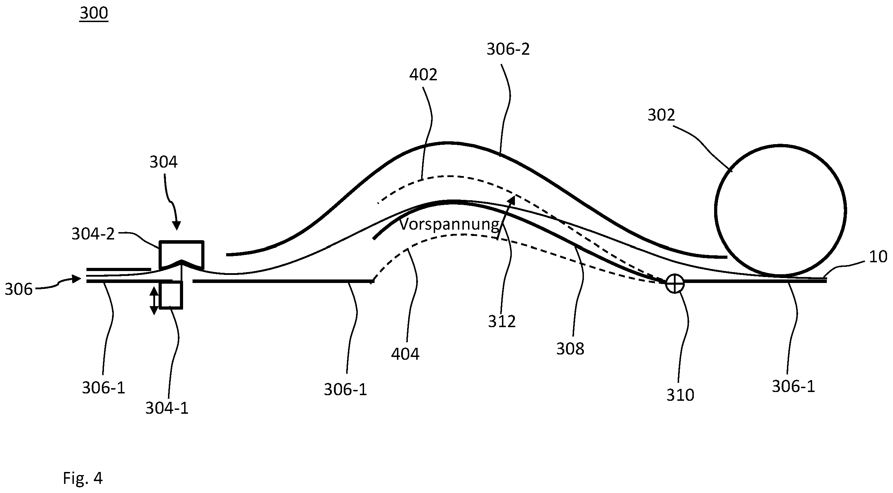

Fig. 4 zeigt die Vorrichtung 300 des ersten Ausführungsbeispiels schematisch mit der beweglichen Führungsfläche 308 in einer zweiten Stellung. Die zweite Stellung befindet sich zwischen der ersten Stellung 402 und einer Anschlags-Stellung 404, in der die Führungsfläche 308 mit ihrem freien, dem Scharnier 310 abgewandten, Ende an den starren Teil der ersten Seite 306-1 anschlägt. Alternativ kann die zweite Stellung der Anschlags-Stellung 404 entsprechen.

Wie in Fig. 4 gezeigt, nimmt die bewegliche Führungsfläche 308 die zweite Stellung ein, wenn der Prägestempel 304-1 das Folienband 10 in das Prägekissen 304-2 eindrückt.

Im ersten Ausführungsbeispiel der Fig. 3 und 4 wird die bewegliche Führungsfläche 308 (insbesondere entgegen der Vorspannung 312) gegenläufig zu einer Bewegung des Prägestempels 304-1 bei der Prägung in die zweite Stellung gebracht.

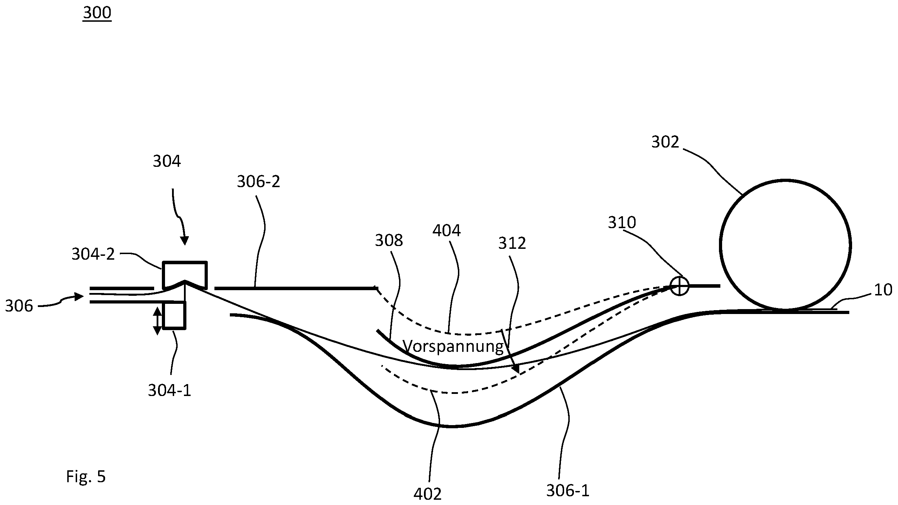

Fig. 5 zeigt schematisch ein zweites Ausführungsbeispiel einer Vorrichtung 300 zum erfindungsgemäßen dynamischen Längenausgleich bei einer Prägung eines Folienbands 10.

Gleiche Teile der Vorrichtung 300 in allen Ausführungsbeispielen sind mit denselben Bezugszeichen bezeichnet.

In dem zweiten Ausführungsbeispiel der Fig. 5 ist die bewegliche Führungsfläche 308 mittels eines federbeaufschlagten Scharniers 310 an einem starren Teil der zweiten Seite 306-2 des Führungskanals 306 drehbar gelagert. In dem zweiten Ausführungsbeispiel der Fig. 5 ist die erste Seite 306-1 des Führungskanals 306 starr.

Im zweiten Ausführungsbeispiel der Fig. 5 wird die bewegliche Führungsfläche 308 (insbesondere entgegen der Vorspannung 312) gleichläufig zu einer Bewegung des Prägestempels 304-1 bei der Prägung in die zweite Stellung gebracht.

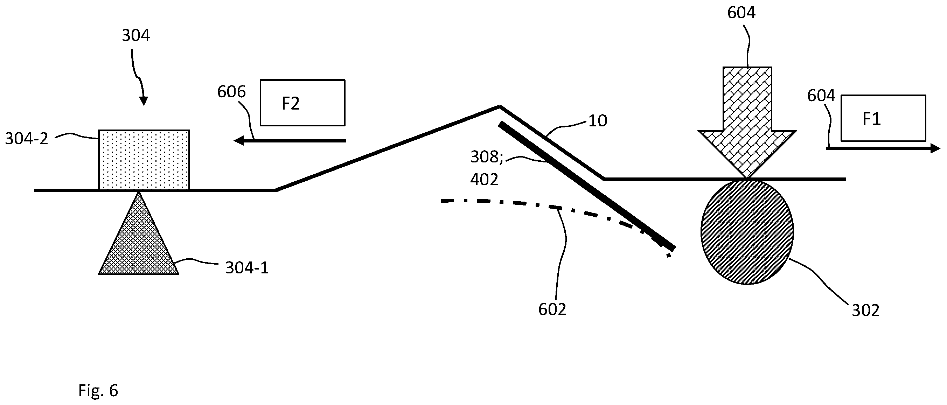

In einem dritten Ausführungsbeispiel umfasst die bewegliche Führungsfläche 308 ein flexibles (z.B. Formgedächtnis-) Material, das an einem Ende (beispielsweise statt mittels eines Scharniers 310) starr an einem starren Teil der ersten Seite 306-1 oder der zweiten Seite 306-2 des Führungskanals 306 angeordnet ist. In dem dritten Ausführungsbeispiel spannt die Ruhestellung des flexiblen Materials und/oder das Formgedächtnis die bewegliche Führungsfläche 308 in der ersten Stellung 402 vor, und in der zweiten Stellung 602 ist das flexibles (z.B. Formgedächtnis-) Material der beweglichen Führungsfläche 308 aus seiner Ruhestellung deformiert, wie schematisch in Fig. 6 gezeigt ist.

Wie anhand vorstehender Ausführungsbeispiele ersichtlich, kann durch die Einbringung der bewegliche Führungsfläche 308 (auch: das flexible Umlenkelement) in den Führungskanal 306 (auch: Medienpfad, kurz: Pfad) eine Zugkraft und/oder Zugbewegung der Prägestelle 304 auf das Folienband 10 bei der Prägung ausgeglichen werden.

Mittels der Vorspannung 312 der beweglichen Führungsfläche 308 kann das (beispielsweise von eine ebenen Fläche umgelenkte) Folienband 10 reproduzierbar den gleichen Weg nehmen, so dass ein absoluter Wert einer Länge des Folienbands 10 (auch: Schildlänge), insbesondere eines Abschnitts zur Umwicklung eines prolaten Objekts und/oder eines Fahnen-Abschnitts zur Anbringung (beispielsweise Bedruckung) einer Kennzeichnung, nicht über einen Toleranzbereich hinaus schwankt. Der Toleranzbereich kann beispielsweise eine Längenänderung des Folienbands 10 von höchstens einem Zehntel Millimeter (0,1 mm) umfassen.

Mittels einer Form der beweglichen Führungsfläche 308 und/oder der Vorspannung 312 der beweglichen Führungsfläche 308 können Störungen, beispielsweise Folienstaus, des Umlenken des Folienbands 10 verhindert werden.

Eine Lebensdauer eines Federelements, beispielsweise angeordnet am Scharnier 308 des ersten und/oder zweiten Ausführungsbeispiels, und/oder eine Lebensdauer eines deformierbaren (z.B. Formgedächtnis-) Materials, beispielsweise gemäß dem dritten Ausführungsbeispiel, kann entsprechend einer geplanten Zyklenzahl, beispielsweise einer Anzahl Prägevorgänge und/oder einer Anzahl von Kennzeichnungen des prolaten Objekts mittels des Folienbands 10, gewählt werden.

Fig. 6 zeigt schematisch eine bewegliche Führungsfläche (auch: flexibles Element) 308, die beispielsweise als Formgedächtnis-Material ausgebildet sein kann und sich unter einer vom Folienband 10 ausgeübten Kraft von der ersten Stellung 402 in die zweite Stellung 602 verformt bzw. bewegt.

Die bewegliche Führungsfläche 308 kann steif genug sein, um das Folienband 10 (auch: das auszulenkende Medium) zu führen. Das bewegliche Führungsfläche 308 soll jedoch nicht stärker sein (beispielsweise keine stärkere Zugkraft auf das Folienband 10 bringen) als eine Festigkeit des Folienbands 10 zulässt oder als eine Klemmkraft, die das Folienband 10 in Position hält (beispielsweise eine Klemmkraft der Druckwalze, auch: Druckrolle, 302). Sonst kann es zu einem Rutschen des Folienbands 10, insbesondere über die bewegliche Führungsfläche 308, kommen. Dadurch kann ein gewünschter Effekt, insbesondere der dynamische Längenausgleich, verloren gehen.

In Fig. 6 ist schematisch eine Andruckkraft (beispielsweise umfassend eine Reibung des Folienbands 10 auf der Druckwalte 302) 604 gezeigt, die effektiv eine Haltekraft F1 auf das von der Druckwalze 302 in Richtung der Prägestelle 304 geführte Folienband 10 ausübt. Eine Größe der Andruckkraft und/oder der Reibung kann durch einen Reibungskoeffizienten der Druckwalze 302 und/oder einen Reibungskoeffizienten des Folienbands 10 bestimmt sein.

Eine Steifigkeit der beweglichen Führungsfläche 308 und/oder ein Winkel (beispielsweise in der ersten Stellung 402 und/oder der zweiten Stellung 602) der beweglichen Führungsfläche 308 können eine erforderliche Zugkraft erzeugen (auch: generieren), um die bewegliche Führungsfläche 308 auszulenken und/oder zu verformen.

Eine Zugkraft F2, wie schematisch am Referenzzeichen 606 gezeigt, kann (insbesondere viel) kleiner als die Haltekraft F1 bei Referenzzeichen 604 sein, F2 < F1 (insbesondere F2 << F1).

In dem Ausführungsbeispiel in Fig. 6 umfasst der Prägestempel 304-1 ein keilförmiges Ende, das das Folienband 10 in den Prägestempel 304-2 drücken und/oder das Folienband 10 prägen kann. Alternativ oder ergänzend kann ein keilförmiges Ende des Prägestempels 304-1 auch als Prägeschwert bezeichnet werden.

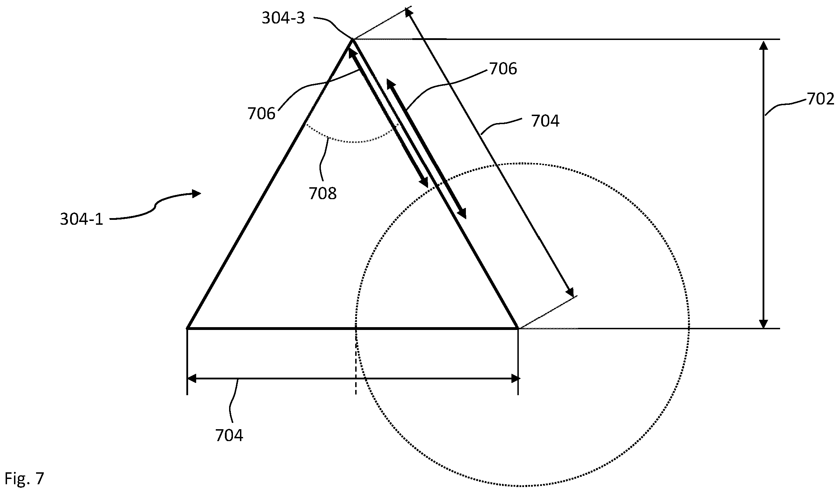

Fig. 7 zeigt ein Beispiel eines keilförmigen Endes 304-1 eines Prägestempels 304-1. In dem Ausführungsbeispiel umfasst die Keilform einen Winkel 708 von 60 Grad. Alternativ oder ergänzend umfasst ein Querschnitt eines Prägeschwerts 304-3 ein gleichwinkliges Dreieck.

In dem Ausführungsbeispiel der Fig. 7 umfasst das keilförmige Ende 304-1 eine Höhe 702, die (z.B. näherungsweise) einer Eindringtiefe des Prägestempels 304-1 in das Prägekissen entsprechen kann. Beispielsweise kann eine (z.B. ordentliche oder ordnungsgemäße) Prägungen eine Eindringtiefe von ein bis zwei Millimeter (insbesondere ca. 1,5 mm) des Prägestempels 304-1 (beispielsweise des Prägeschwerts 304-3) in das Prägekissen 304-2 umfassen.

Der Höhe 702 ist beim gleichwinkligen Dreieck das $\sqrt{3}/2$-fache der Seitenlänge 704. In dem Beispiel einer Höhe von 1,5 mm entspricht die Seitenlänge ungefähr 1,73 mm und die halbe Seitenlänge 706 ungefähr 0,87 mm.

Aus der Eindringtiefe des Prägestempels 304-1 resultiert ein zusätzlicher Einzugsweg (der auch mit "Delta" bezeichnet werden kann) des Folienbandes ungefähr entsprechend der halben Seitenlänge 706, beispielsweise 0,87 mm zusätzlicher Einzugsweg. Der zusätzliche Einzugsweg kann sich auf eine Änderung der Länge des Folienbands 10 zwischen dem keilförmigen Ende und/oder dem Prägeschwert 304-3 an einem Ende des Führungskanals 306 und einer Druckwalze am anderen Ende des Führungskanals beziehen, wie beispielhaft an Referenzzeichen 706 in Fig. 7 gezeigt.

Vorzugsweise ist der Führungskanal 306 um den Einzugsweg, beispielsweise die halbe Seitenlänge 706, in der ersten Stellung 402 der Führungsfläche 308 länger als in der zweiten Stellung 602 der Führungsfläche 308.

Die erste Stellung 402 der Führungsfläche 308 kann auch als Ausbildung einer Schikane bezeichnet werden.

Eine Änderung der Länge des Führungskanals 308 von der ersten Stellung 402 in die zweite Stellung 602 kann abhängig von einer Tiefe der Prägung sein und/oder der Tiefe der Prägung entsprechen.

Der dynamische Längenausgleich, beispielsweise mit einem vorherbestimmten Toleranzbereich und/oder einer Abweichung einer Länge des Folienbands 10 um weniger als einen Millimeter (insbesondere im Bereich von 1/10 mm oder geringer), bei der Prägung kann durch Bewegung der beweglichen Führungsfläche 308 von der ersten Stellung 402 in die zweite Stellung 602 erreicht werden. Beispielsweise kann der Längenausgleich durch eine Wahl einer Länge einer (insbesondere starren) Führungsfläche 308 um eine Drehachse (beispielsweise bestimmt durch ein Scharnier 310) und/oder durch eine Wahl einer Elastizität eines (beispielsweise Formgedächtnis-) Materials ermöglicht werden.

Die Führungsfläche 308 kann als Material Polyester (z.B. Hostaphan) und/oder ein Federstahlblech umfassen.

Das Folienband 10 kann ein Kunststoff-Band zum Verschweißen, ein selbstklebendes Band, einen Träger für Klebeetiketten und/oder Steckschildchen umfassen. Alternativ oder ergänzend kann das Folienband 10 als Material eine Heißsiegelfolie (z.B. ein Laminat aus Polyester und/oder Schmelzkleber) umfassen.

Das Folienband 10 kann eine Dicke kleiner als ein Zehntel eines Millimeters, beispielsweise 0,03 mm, umfassen. Alternativ oder ergänzend kann eine Breite des Folienbands 10 zwischen einigen Millimetern und einem Viertel oder einem halben Zentimeter umfassen, beispielsweise kann eine Breite zwischen 15 mm und 23 mm umfassen.

Eine Feder, eine Federkonstante, ein Hebelarm, eine Länge und/oder eine Elastizität (insbesondere eines Formgedächtnis-Materials) der beweglichen Führungsfläche 308 (beispielsweise in Förderrichtung) kann in einem geeigneten Größenverhältnis zu einer Dehnbarkeit des Folienbands 10 gewählt werden, um den dynamischen Längenausgleich mit einer vorbestimmten maximalen Abweichung (beispielsweise einer maximalen Verschiebung und/oder maximalen Dehnung des Folienbands 10) zu erreichen. Die Abweichung kann beispielsweise im Bereich zwischen mehreren Mikrometern und einem Millimeter, insbesondere 0,1 mm, sein.

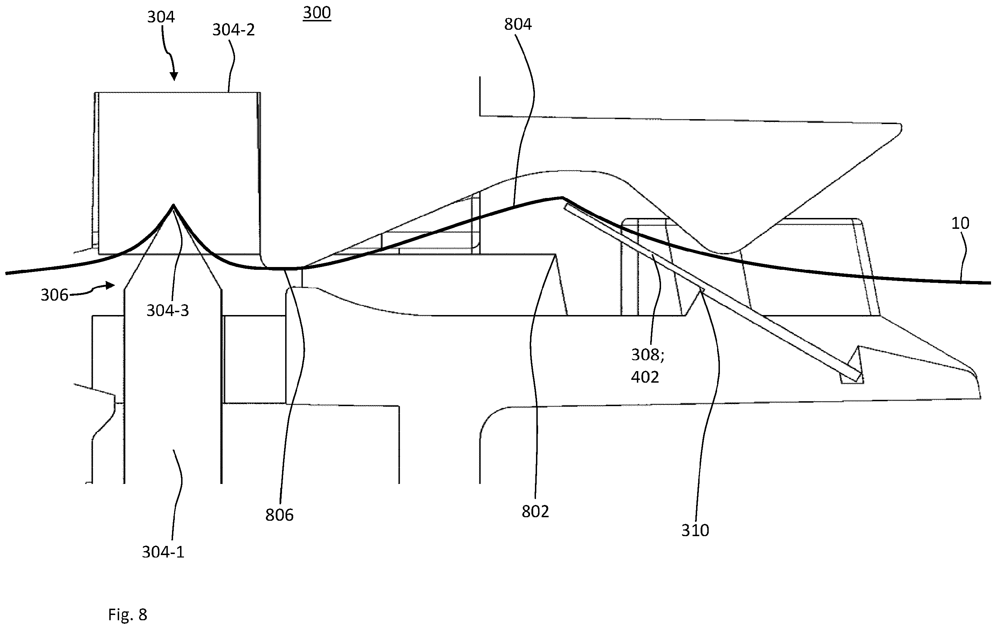

Fig. 8 zeigt ein weiteres Ausführungsbeispiel einer Vorrichtung 300 mit einem Prägestempel 304-1 gemäß Fig. 7. Das Ausführungsbeispiel der Fig. 8 umfasst eine als geradlinigen Hebelarm ausgebildete Führungsfläche 308. Wie in Fig. 8 kann eine Länge des Hebelarms 4,15 mm umfassen. Das Folienband 10 kann an einem Umlenkpunkt 806 zwischen der beweglichen Führungsfläche 308 und der Prägestelle 305 im Führungskanal 306 umgelenkt werden. In dem Beispiel der Fig. 8 kann eine freie Weglänge des Folienbands 10 in der ersten Stellung (Referenzzeichen 402) 8,66 mm umfassen. Alternativ oder ergänzend kann eine Umlenkung des Folienbands 10 aus einem ebenen Führungskanal in der ersten Stellung 402 der Führungsfläche 308 insgesamt 4,15 mm + 8,66 mm = 12,81 mm umfassen.

Eine Weglänge des Folienbands 10 in der zweiten Stellung 602 der Führungsfläche 308 kann von der Drehachse (beispielsweise einem Scharnier) 310 bis zum Umlenkpunkt 802 ungefähr 12,01 mm umfassen. Alternativ oder ergänzend kann die Änderung der Weglänge des Folienbands 10 im Führungskanal 306 von der ersten Stellung 402 zur zweiten Stellung 602 beispielsweise 0,80 mm umfassen.

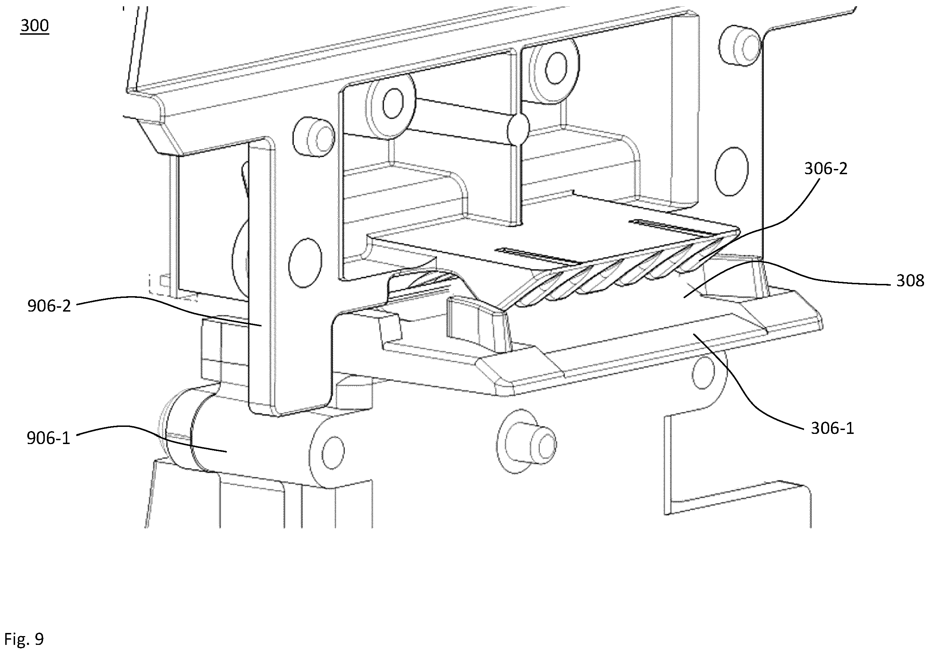

Fig. 9 zeigt ein weiteres Ausführungsbeispiel einer Vorrichtung 300 mit einem deformierbaren (beispielsweise Formgedächtnis-) Material, insbesondere einer Feder, als beweglicher Führungsfläche 308. Die untere Hälfte 906-1 der Vorrichtung ist in dem gezeigten Ausführungsbeispiel beispielsweise dem Prägestempel zugewandt und umfasst die Seite 306-1 des Führungskanals. Die obere Hälfte 906-2 der Vorrichtung ist in dem gezeigten Ausführungsbeispiel beispielsweise dem Prägekissen zugewandt und umfasst die Seite 306-2 des Führungskanals. Alternativ oder ergänzend kann die obere Hälfte der Vorrichtung dem Prägestempel zugewandt sein und die Seite 306-1 des Führungskanals umfassen. Die untere Hälfte der Vorrichtung kann dem Prägekissen zugewandt sein die Seite 306-2 des Führungskanals umfassen. Alternativ oder ergänzend kann die Führungsfläche 308 in einem ersten Ausführungsbeispiel, z.B. wie in Fig. 9 gezeigt, an der unteren Hälfte der Vorrichtung 300 und in einem zweiten Ausführungsbeispiel an der oberen Hälfte der Vorrichtung 300 angeordnet sein.

Obwohl die Erfindung in Bezug auf exemplarische Ausführungsbeispiele beschrieben worden ist, ist für Fachkundige ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

Bezugszeichenliste

| | |
|---|---|
| Folienband | 10 |
| Druckwalze | 12 |

(fortgesetzt)

| | |
|---|---|
| Prägestelle | 14 |
| Prägestempel | 14-1 |
| Prägekissen | 14-2 |
| Herkömmlicher starrer Führungskanal | 16 |
| Dem Prägestempel zugewandte Seite des starren Führungskanals | 16-1 |
| Dem Prägekissen zugewandte Seite des starren Führungskanals | 16-2 |
| Vorrichtung | 300 |
| Walze zum schlupffreien Transport eines Folienbands, z.B. Druckwalze | 302 |
| Prägestelle | 304 |
| Prägestempel | 304-1 |
| Prägekissen | 304-2 |
| Prägeschwert | 304-3 |
| Führungskanal | 306 |
| Dem Prägestempel zugewandte Seite des Führungskanals | 306-1 |
| Dem Prägekissen zugewandte Seite des Führungskanals | 306-2 |
| Führungsfläche | 308 |
| Scharnier | 310 |
| Vorspannung | 312 |
| Erste Stellung | 402 |
| Anschlags-Stellung | 404 |
| Zweite Stellung | 602 |
| Haltekraft der Walze | 604 |
| Zugkraft der Prägestelle | 606 |
| Eindringtiefe des Prägestempels | 702 |
| Breite des Prägestempels an der Eindringtiefe | 704 |
| Einzugslänge des Folienbands bei der Prägung | 706 |
| Winkel des keilförmigen Endes (Prägeschwerts) | 708 |
| Anschlags-Stelle der Führungsfläche | 802 |
| Freie Weglänge des Folienbands | 804 |
| Umlenkpunkt des Folienbands | 806 |
| Dem Prägestempel zugewandte Seite der Vorrichtung | 906-1 |
| Dem Prägekissen zugewandte Seite der Vorrichtung | 906-2 |

**Patentansprüche**

1. Vorrichtung (300) zum dynamischen Längenausgleich bei einer Prägung eines Folienbands (10), umfassend:

    eine Prägestelle (304),
    eine Walze (302), die zum schlupffreien Transport des Folienbands (10) ausgebildet ist, und
    einen zwischen der Prägestelle (304) und der Walze (302) angeordneten Führungskanal (306),
    **dadurch gekennzeichnet, dass**
    der Führungskanal (306) eine zwischen einer ersten Stellung (402) und einer zweiten Stellung (602) bewegliche Führungsfläche (308) umfasst, wobei eine Weglänge des Folienbands (10) zwischen der Walze (302) und der Prägestelle (304) in der ersten Stellung (402) der Führungsfläche (308) größer ist als eine Weglänge des Folienbands (10) zwischen der Walze (302) und der Prägestelle (304) in der zweiten Stellung (602), wobei das Folienband (10) in der ersten Stellung (402) der Führungsfläche (308) im Führungskanal (306) von der Walze (302) zur Prägestelle (304) gefördert wird, und wobei die Führungsfläche (308) bei der Prägung des Folienbands (10) von der ersten Stellung (402) in die zweite Stellung (602) bewegt wird.

2. Vorrichtung (300) nach Anspruch 1, wobei die zum schlupffreien Transport des Folienbands (10) ausgebildete Walze (302) eine Druckwalze und/oder eine Transportwalze umfasst.

3. Vorrichtung (300) nach Anspruch 1 oder 2, wobei die Führungsfläche (308) vorgespannt (312) ist zur Bewegung aus der ersten Stellung (402) und in die zweite Stellung (602).

4. Vorrichtung (300) nach einem der Ansprüche 1 bis 3, wobei das Folienband (10) in der ersten Stellung (402) und/oder in der zweiten Stellung (602) an mindestens einem Abschnitt der Führungsfläche (308) anliegt zur krummlinigen Führung des Folienbands (10) im Führungskanal (306).

5. Vorrichtung (300) nach einem der Ansprüche 1 bis 4, wobei die Führungsfläche (308) eine drehbar gelagerte Walze aufweist, über die das Folienband (10), vorzugsweise schlupffrei, geführt ist.

6. Vorrichtung (300) nach einem der Ansprüche 1 bis 5, wobei die Führungsfläche (308) auf einer dem Folienband (10) zugewandten Seite konvex ist.

7. Vorrichtung (300) nach einem der Anspruch 6, wobei ein Krümmungsradius der konvexen Führungsfläche (308) kleiner ist als die Weglänge des im Führungskanal (306) geführten Folienbands (10).

8. Vorrichtung (300) nach einem der Anspruch 6 oder 7, wobei ein Krümmungsradius der konvexen Führungsfläche (308) vielfach größer ist als eine Dicke des Folienbands (10).

9. Vorrichtung (300) nach einem der Ansprüche 6 bis 8, wobei ein Krümmungsradius der konvexen Führungsfläche (308) in der ersten Stellung (402) und/oder in der zweiten Stellung (602) größer als eine Breite des Führungskanals (306) ist.

10. Vorrichtung (300) nach einem der Ansprüche 1 bis 9, wobei das Folienband (10) sowohl in der ersten Stellung (402) als auch in der zweiten Stellung (602) an der Führungsfläche (308) anliegt.

11. Vorrichtung nach einem der Ansprüche 1 bis 10, wobei die Führungsfläche (308) zwischen der ersten Stellung (402) und der zweiten Stellung (602) schwenkbeweglich ist, optional wobei eine Drehachse der Schwenkbewegung senkrecht zum Folienband (10) und/oder senkrecht zum durch den Führungskanal (306) bestimmten Verlauf des Folienbands (10) angeordnet ist.

12. Vorrichtung (300) nach einem der Ansprüche 1 bis 11, wobei die Prägestelle (304) einen quer zum Führungskanal (306) beweglichen Prägestempel (304-1) und ein in der Querbewegung des Prägestempels (304-1) angeordnetes Prägekissen (304-2) umfasst, und wobei der Führungskanal (306) an der Prägestelle (304) zwischen dem Prägestempel (304-1) und dem Prägekissen (304-2) mündet.

13. Vorrichtung (300) nach Anspruch 10, wobei die Querbewegung des Prägestempels (304-1) in das Prägekissen (304-2) die Weglänge des Folienbands (10) im Führungskanal (306), optional entgegen einer Vorspannung (312) der Führungsfläche (308), verkürzt.

14. Vorrichtung (300) nach Anspruch 12 oder 13, wobei die Führungsfläche (308) und der Prägestempel (304-1) sich bei der Prägung gleichläufig bezüglich einer Querrichtung des Führungskanals (306) bewegen.

15. Vorrichtung (300) nach einem der Ansprüche 12 bis 14, wobei der Prägestempel (304-1) ein Prägeschwert (304-3) umfasst, das vorzugsweise senkrecht zum Führungskanal (306) steht.

16. Verfahren zum dynamischen Längenausgleich bei einer Prägung eines Folienbands (10), umfassend:

Fördern des Folienbands (10) in einem zwischen einer Walze (302), die zum schlupffreien Transport des Folienbands (10) ausgebildet ist, und einer Prägestelle (304) angeordneten Führungskanal (306), wobei das Folienband (10) in einer Richtung von der Walze (302) zu der Prägestelle (304) gefördert wird,
**dadurch gekennzeichnet, dass**
der Führungskanal (306) eine zwischen einer ersten Stellung (402) und einer zweiten Stellung (602) bewegliche Führungsfläche (308) umfasst, und wobei die Führungsfläche (308) beim Fördern die ersten Stellung (402) umfasst,
Prägen des Folienbands (10) mittels der Prägestelle (304), wobei die Führungsfläche (308) beim Prägen in die zweite Stellung (602) bewegt wird, wobei eine Weglänge des Folienbands (10) zwischen der Walze (302) und der Prägestelle (304) in der ersten Stellung (402) der Führungsfläche (308) größer ist als eine Weglänge des Folienbands (10) zwischen der Walze (302) und der Prägestelle (304) in der zweiten Stellung (602).

**Claims**

1. Device (300) for dynamic length compensation during embossing of a foil strip (10), comprising:

   an embossing point (304),
   a roller (302) which is designed for the slip-free transport of the foil strip (10), and
   a guide channel (306) arranged between the embossing point (304) and the roller (302),
   **characterized in that**
   the guide channel (306) comprises a guide surface (308) which is movable between a first position (402) and a second position (602), wherein a path length of the foil strip (10) between the roller (302) and the embossing point (304) in the first position (402) of the guide surface (308) is greater than a path length of the foil strip (10) between the roller (302) and the embossing point (304) in the second position (602), wherein the foil strip (10) is conveyed in the guide channel (306) from the roller (302) to the embossing point (304) in the first position (402) of the guide surface (308), and wherein the guide surface (308) is moved from the first position (402) into the second position (602) while the foil strip (10) is embossed.

2. Device (300) according to Claim 1, wherein the roller (302) formed for the slip-free transport of the foil strip (10) comprises a pressure roller and/or a transport roller.

3. Device (300) according to Claim 1 or 2, wherein the guide surface (308) is preloaded (312) for the movement from the first position (402) and into the second position (602).

4. Device (300) according to one of Claims 1 to 3, wherein the foil strip (10) bears, in the first position (402) and/or in the second position (602), against at least one portion of the guide surface (308) for the curvilinear guidance of the foil strip (10) in the guide channel (306).

5. Device (300) according to one of Claims 1 to 4, wherein the guide surface (308) has a rotatably mounted roller, over which the foil strip (10) is guided, preferably in a slip-free manner.

6. Device (300) according to one of Claims 1 to 5, wherein the guide surface (308) is convex on a side facing the foil strip (10).

7. Device (300) according to Claim 6, wherein a radius of curvature of the convex guide surface (308) is smaller than the path length of the foil strip (10) guided in the guide channel (306).

8. Device (300) according to either of Claims 6 or 7, wherein a radius of curvature of the convex guide surface (308) is many times greater than a thickness of the foil strip (10).

9. Device (300) according to one of Claims 6 to 8, wherein a radius of curvature of the convex guide surface (308) in the first position (402) and/or in the second position (602) is greater than a width of the guide channel (306).

10. Device (300) according to one of Claims 1 to 9, wherein the foil strip (10) bears, both in the first position (402) and in the second position (602), against the guide surface (308).

11. Device according to one of Claims 1 to 10, wherein the guide surface (308) is pivotally movable between the first position (402) and the second position (602), optionally wherein a rotational axis of the pivoting movement is arranged perpendicularly with respect to the foil strip (10) and/or perpendicularly with respect to the course of the foil strip (10) determined by the guide channel (306).

12. Device (300) according to one of Claims 1 to 11, wherein the embossing point (304) comprises an embossing punch (304-1) which is movable transversely with respect to the guide channel (306) and an embossing pad (304-2) arranged in the transverse movement of the embossing punch (304-1), and wherein the guide channel (306) opens at the embossing point (304) between the embossing punch (304-1) and the embossing pad (304-2).

13. Device (300) according to Claim 10, wherein the transverse movement of the embossing punch (304-1) into the embossing pad (304-2) shortens the path length of the foil strip (10) in the guide channel (306), optionally counter to a preload (312) of the guide surface (308).

14. Device (300) according to Claim 12 or 13, wherein the guide surface (308) and the embossing punch (304-1) move during the embossing operation in parallel with regard to a transverse direction of the guide channel (306).

15. Device (300) according to one of Claims 12 to 14, wherein the embossing punch (304-1) comprises an embossing blade (304-3) which is preferably perpendicular with respect to the guide channel (306).

16. Method for dynamic length compensation during embossing of a foil strip (10), comprising:

conveying the foil strip (10) in a guide channel (306) arranged between a roller (302), which is designed for slip-free transport of the foil strip (10), and an embossing point (304), wherein the foil strip (10) is conveyed in a direction from the roller (302) to the embossing point (304),
**characterized in that**
the guide channel (306) comprises a guide surface (308) which is movable between a first position (402) and a second position (602), and wherein the guide surface (308) comprises the first position (402) when conveying, embossing the foil strip (10) by means of the embossing point (304), wherein the guide surface (308) is moved into the second position (602) during embossing, wherein a path length of the film strip (10) between the roller (302) and the embossing point (304) in the first position (402) of the guide surface (308) is greater than a path length of the foil strip (10) between the roller (302) and the embossing point (304) in the second position (602).

## Revendications

1. Dispositif (300) pour la compensation dynamique en longueur lors d'un gaufrage d'une bande de film (10), comprenant :

un point de gaufrage (304),
un rouleau (302), qui est réalisé pour transporter sans glissement la bande de film (10), et
un canal de guidage (306) agencé entre le point de gaufrage (304) et le rouleau (302),
**caractérisé en ce que**
le canal de guidage (306) comprend une surface de guidage (308) mobile entre une première position (402) et une deuxième position (602), une longueur de trajet de la bande de film (10) entre le rouleau (302) et le point de gaufrage (304) dans la première position (402) de la surface de guidage (308) étant supérieure à une longueur de trajet de la bande de film (10) entre le rouleau (302) et le point de gaufrage (304) dans la deuxième position (602), la bande de film (10) étant transportée dans la première position (402) de la surface de guidage (308) dans le canal de guidage (306) par le rouleau (302) vers le point de gaufrage (304), et la surface de guidage (308) étant déplacée de la première position (402) à la deuxième position (602) lors du gaufrage de la bande de film (10).

2. Dispositif (300) selon la revendication 1, dans lequel le rouleau (302) réalisé pour le transport sans glissement de la bande de film (10) comprend un rouleau de pression et/ou un rouleau de transport.

3. Dispositif (300) selon la revendication 1 ou 2, dans lequel la surface de guidage (308) est précontrainte (312) pour se déplacer de la première position (402) et vers la deuxième position (602).

4. Dispositif (300) selon l'une quelconque des revendications 1 à 3, dans lequel la bande de film (10) est en appui sur au moins une section de la surface de guidage (308) dans la première position (402) et/ou dans la deuxième position (602) pour le guidage curviligne de la bande de film (10) dans le canal de guidage (306).

5. Dispositif (300) selon l'une quelconque des revendications 1 à 4, dans lequel la surface de guidage (308) présente un rouleau monté rotatif par l'intermédiaire duquel la bande de film (10) est guidée, de préférence sans glissement.

6. Dispositif (300) selon l'une quelconque des revendications 1 à 5, dans lequel la surface de guidage (308) est convexe sur un côté tourné vers la bande de film (10).

7. Dispositif (300) selon la revendication 6, dans lequel un rayon de courbure de la surface de guidage convexe (308) est inférieur à la longueur de trajet de la bande de film (10) guidée dans le canal de guidage (306).

8. Dispositif (300) selon l'une quelconque des revendications 6 ou 7, dans lequel un rayon de courbure de la surface de guidage convexe (308) est plusieurs fois supérieur à une épaisseur de la bande de film (10).

9. Dispositif (300) selon l'une quelconque des revendications 6 à 8, dans lequel un rayon de courbure de la surface de guidage convexe (308) dans la première position (402) et/ou dans la deuxième position (602) est supérieur à une largeur du canal de guidage (306).

10. Dispositif (300) selon l'une quelconque des revendications 1 à 9, dans lequel la bande de film (10) est en appui contre la surface de guidage (308) à la fois dans la première position (402) et dans la deuxième position (602).

11. Dispositif selon l'une quelconque des revendications 1 à 10, dans lequel la surface de guidage (308) est mobile en pivotement entre la première position (402) et la deuxième position (602), optionnellement dans lequel un axe de rotation du mouvement de pivotement est agencé perpendiculairement à la bande de film (10) et/ou perpendiculairement au parcours de la bande de film (10) déterminé par le canal de guidage (306).

12. Dispositif (300) selon l'une quelconque des revendications 1 à 11, dans lequel le point de gaufrage (304) comprend un poinçon de gaufrage (304-1) mobile transversalement au canal de guidage (306) et un tampon de gaufrage (304-2) agencé dans le mouvement transversal du poinçon de gaufrage (304-1), et dans lequel le canal de guidage (306) débouche au niveau du point de gaufrage (304) entre le poinçon de gaufrage (304-1) et le tampon de gaufrage (304-2).

13. Dispositif (300) selon la revendication 10, dans lequel le mouvement transversal du poinçon de gaufrage (304-1) dans le tampon de gaufrage (304-2) raccourcit la longueur de trajet de la bande de film (10) dans le canal de guidage (306), optionnellement à l'encontre d'une précontrainte (312) de la surface de guidage (308).

14. Dispositif (300) selon la revendication 12 ou 13, dans lequel la surface de guidage (308) et le poinçon de gaufrage (304-1) se déplacent dans la même direction par rapport à une direction transversale du canal de guidage (306) lors du gaufrage.

15. Dispositif (300) selon l'une quelconque des revendications 12 à 14, dans lequel le poinçon de gaufrage (304-1) comprend une lame de gaufrage (304-3), de préférence perpendiculaire au canal de guidage (306).

16. Procédé de compensation dynamique en longueur lors d'un gaufrage d'une bande de film (10), comprenant :

le transport de la bande de film (10) dans un canal de guidage (306) agencé entre un rouleau (302), qui est réalisé pour transporter la bande de film (10) sans glissement, et un point de gaufrage (304), la bande de film (10) étant transportée dans une direction du rouleau (302) vers le point de gaufrage (304),
**caractérisé en ce que**
le canal de guidage (306) comprend une surface de guidage (308) mobile entre une première position (402) et une deuxième position (602), et dans lequel la surface de guidage (308) comprend la première position (402) lors du transport,
le gaufrage de la bande de film (10) au moyen du point de gaufrage (304), la surface de guidage (308) étant déplacée dans la deuxième position (602) lors du gaufrage, une longueur de trajet de la bande de film (10) entre le rouleau (302) et le point de gaufrage (304) dans la première position (402) de la surface de guidage (308) étant supérieure à une longueur de trajet de la bande de film (10) entre le rouleau (302) et le point de gaufrage (304) dans la deuxième position (602).

Fig. 1  (Stand der Technik)

Fig. 2  (Stand der Technik)

EP 4 415 948 B1

13

300

302

10

306-2

10

10

306-1

Erste Stellung

Vorspannung

312

308

310

304

304-3

304-1

304-2

306-1

306

Fig. 3

Fig. 4

EP 4 415 948 B1

300

304

304-2

306

306-2

304-1

308

404

312

310

302

Vorspannung

10

402

306-1

Fig. 5

Fig. 6

Fig. 7

Fig. 8

EP 4 415 948 B1

300

306-2

308

906-2

906-1

306-1

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2019202162 A1
- DE 19748789 A1
- WO 2009143644 A1